# EUROPÄISCHE PATENTSCHRIFT

(11) **EP 4 006 496 B1**
(45) Veröffentlichungstag und Bekanntmachung des Hinweises auf die Patenterteilung: **29.01.2025**
(21) Anmeldenummer: 20210352.9
(22) Anmeldetag: 27.11.2020
(51) Int. Cl.: G01D 11/24

(54) **UNTERBAUGRUPPE FÜR EINEN SENSOR**
SUBASSEMBLY FOR A SENSOR
SOUS-ENSEMBLE POUR UN CAPTEUR

(43) Veröffentlichungstag der Anmeldung: 01.06.2022
(73) Patentinhaber: Pepperl+Fuchs SE, 68307 Mannheim (DE)
(72) Erfinder: ELTER, Johann, 68307 Mannheim (DE); GEIGER, Thomas, 68307 Mannheim (DE); DREBES, Patrick, 68307 Mannheim (DE)
(74) Vertreter: Hamel, Armin

(56) Entgegenhaltungen:
- DE-A1- 19 712 879
- DE-A1- 3 321 666
- US-A- 5 588 202

## Beschreibung

Die vorliegende Erfindung betrifft eine Unterbaugruppe für einen Sensor nach dem Oberbegriff des Patentanspruchs 1.

Ein Sensor ist eine technische Vorrichtung, die bestimmte physikalische oder chemische Eigenschaften wie beispielsweise Wärmemenge, Temperatur, Feuchtigkeit, Druck, Schallfeldgrößen, Helligkeit, Beschleunigung, pH-Wert, elektrochemisches Potential aber auch stoffliche Beschaffenheiten seiner Umgebung qualitativ erfassen kann. Diese Größen werden mittels physikalischer, chemischer oder biologischer Effekte erfasst und in ein elektrisches Signal umgewandelt. Dieses elektrische Signal kann anschließend weiterverarbeitet werden. All diese Sensoren weisen eine Unterbaugruppe auf, die eine Leiterplatte aufweist.

So ist beispielsweise aus DE 10 2008 006 746 A1 ein Sensor mit einer Wandlereinheit bekannt, wobei die Wandlereinheit in einer Gehäusehülse an einem Messende angeordnet ist. Es sind Anschlussmittel an einem dem Messende gegenüberliegenden Anschlussende der Gehäusehülse vorgesehen, mit einem in der Gehäusehülse aufgenommenen Baugruppenträger, auf dem eine Sensorelektronik angeordnet ist und der sich entlang einer Achse der Gehäusehülse erstreckt. Weiterhin sind Leuchtmittel zum optischen Signalisieren von Betriebs- und/oder Schaltzuständen des Sensors vorgesehen.

Aus DE 197 12 879 A1 ist ein Verfahren zum Herstellen eines auf einer mit Leiterbahnen bedruckten Leiterplatte angeordneten Schaltkreises, insbesondere Schaltkreis eines Näherungsschalters, bekannt. Dabei wird eine Vielzahl von mit gleichartigen Leiterbahnstrukturen versehenen Leiterplatten als Teil eines gemeinsamen Nutzens mit elektronischen Bauteilen bestückt und anschließend vom Nutzen vereinzelt wird. Um dieses Verfahren zu vereinfachen und insbesondere die Weiterverarbeitung der Leiterplatten zu verbessern, ist vorgesehen, dass die Leiterplatten auf dem Nutzen abwechselnd gegensinnig ausgerichtet nebeneinander und beabstandet vom Rand des Nutzens liegen und dass vor der Vereinzelung durch eine mäanderförmige Spaltung des Nutzens Teilnutzen gebildet werden, auf denen die Leiterplatten um mindestens eine Leiterplattenbreite beabstandet und gleichsinnig ausgerichtet liegen.

Problematisch bei den bisher bekannten Sensoren ist, dass es unterschiedliche Sensorlängen gibt, so dass unterschiedliche Distanzen zwischen einem Spulensystem und einem Gerätestecker bzw. einem Kabelanschluss überbrückt werden müssen. Um diese unterschiedlichen Distanzen zu überbrücken, können Leiterplatten mit unterschiedlicher Länge eingesetzt werden. Alternativ können auch Kabelanschlüsse, Anzeige-LEDs sowie Steckerstifte in ihrer Länge variiert werden. Zudem sind flexible Verbindungen mittels Litzen-, Flex- oder Starrflex-Leiterplatten bekannt. Werden unterschiedliche Distanzen durch Leiterplatten unterschiedlicher Längen überbrückt, so müssen Leiterplatten verschiedenster Längen bereitgestellt und auch gelagert werden, was mit Kosten verbunden ist. Gleiches gilt auch, wenn man diese Distanzen durch Kabelanschlüsse, Anzeige-LEDs sowie Steckerstifte unterschiedlicher Länge überbrücken möchte.

Denkbar ist auch, dass die Leiterplatten entsprechend gekürzt werden, um eine kleinere Distanz zu überbrücken. Das Kürzen einer großen Leiterplatte ist allerdings relativ teuer.

Werden die Distanzen durch flexible Verbindungen überbrückt, so entsteht zwar eine sehr variable Baugruppe, bestehend aus Spulensystem, Leiterplatte und Stecker bzw. aus Spulensystem, Leiterplatte und Kabelanschluss, jedoch ist der Bau einer solchen Anordnung aufwändig und muss meist händisch durchgeführt werden, was wiederum mit hohen Kosten verbunden ist.

Aufgabe der vorliegenden Erfindung ist es daher, eine Unterbaugruppe bereitzustellen, die in Sensoren unterschiedlicher Länge eingesetzt werden kann, um dadurch eine Distanz zwischen Spulensystem und Gerätestecker bzw. zwischen Spulensystem und Kabelanschluss einfach zu überbrücken.

Diese Aufgabe wird durch die Merkmale des Patentanspruchs 1 gelöst.

Die Erfindung betrifft somit eine Unterbaugruppe für einen Sensor, umfassend ein Spulensystem sowie eine daran angeordnete Leiterplatte, wobei sich an die Leiterplatte ein Verlängerungsabschnitt anschließt, wodurch die Leiterplatte zwischen dem Spulensystem und dem Verlängerungsabschnitt angeordnet ist. Zwischen dem Verlängerungsabschnitt und der Leiterplatte ist eine Trennstelle vorgesehen, die ein einfaches Abtrennen des Verlängerungsabschnitts von der Leiterplatte mittels eines Werkzeugs ermöglicht. Bei dem Werkzeug handelt es sich vorzugsweise um einen Stegtrenner. Durch Kürzen des Verlängerungsabschnitts oder gar Entfernen des Verlängerungsabschnitts von der Leiterplatte kann die Unterbaugruppe einfach an die Länge eines Sensors, in den die Unterbaugruppe eingebaut werden soll, angepasst werden. Vorteilhaft ist dabei, dass die Leiterplatte immer die gleiche Länge besitzt und beim Anpassen des Verlängerungsabschnitts an die Länge des Sensors nicht bearbeitet und daher auch nicht beschädigt wird.

Dieser Verlängerungsabschnitt weist entlang einer Längsrichtung der Unterbaugruppe mehrere hintereinander angeordnete Abschnitte auf, wobei zwischen jedem Abschnitt eine Trennstelle für ein einfaches Durchtrennen des Verlängerungsabschnitts vorgesehen ist. Damit besitzt der Verlängerungsabschnitt in Längsrichtung mehrere Trennstellen, die vorzugsweise einen definierten Abstand zueinander aufweisen. Als Werkzeug für das Abtrennen der Abschnitte voneinander kann beispielsweise ein Stegtrenner dienen. Dies hat den Vorteil, dass die Unterbaugruppe beim Bearbeiten mit dem Werkzeug nur geringen Belastungen ausgesetzt ist und weder Staub noch Schmauch entstehen, wie dies beispielsweise beim Sägen, Lasertrennen oder Fräsen einer Leiterplatte der Fall ist. Damit lässt sich der Prozess des Kürzens der Unterbaugruppe leicht in den Fertigungsprozess des Sensors integrieren. Entsprechendes gilt natürlich auch, wenn der gesamte Verlängerungsabschnitt von der Leiterplatte abgetrennt werden soll.

In einer Ausführungsform können die Trennstellen eine Ausfräsung, mindestens eine Kerbe und/oder mindestens eine Bohrung sein. Die Kerben könne beispielsweise V-Kerben oder U-Kerben sein. Die derart ausgestalten Trennstellen können einfach und daher kostengünstig in den Verlängerungsabschnitt eingebracht werden.

In einer vorteilhaften Ausführungsform ist es möglich, dass jede Trennstelle entlang einer Querrichtung des Verlängerungsabschnitts und vorzugsweise auch in einem definierten Abstand zueinander mehrere Bohrungen und/oder mehrere Kerben aufweist. Liegen mehrere Bohrungen bzw. mehrere Kerben nebeneinander, so gestaltet sich das Durchtrennen mittels eines Werkzeugs an der gewünschten Trennstelle noch einfacher.

In einer besonderen Ausführungsform sind die wenigstens eine Bohrung und/oder die wenigstens eine Kerbe im Wesentlichen in einer Ausfräsung angeordnet, die entlang der Querrichtung verläuft. Dadurch gestaltet sich das Abtrennen besonders einfach.

Besonders vorteilhaft ist, wenn jeder Abschnitt eine Anordnung, umfassend zumindest ein Anschlusselement für Kabel aufweist, weil dadurch gewährleistet wird, dass das zumindest eine Kabel bzw. eine Anordnung, bestehen aus mehreren Kabeln, immer ein Ende der Unterbaugruppe angeordnet wird. Da dieses Ende dem Ende der Unterbaugruppe, an dem das Spulensystem angebracht ist, gegenüber liegt, muss die Kabellänge in dem Sensor der Länge des Sensors nicht mehr angepasst werden.

Weiterhin betrifft die Erfindung einen Sensor, der die oben beschriebene Unterbaugruppe aufweist.

Schließlich betrifft die Erfindung noch einen Sensor, bei dem der Verlängerungsabschnitt vollständig oder teilweise von der Leiterplatte entfernt worden ist.

Es wird explizit auch vorgeschlagen, mehrere Merkmale der einzelnen beschriebenen Ausführungsformen untereinander zu kombinieren.

Ausführungsbeispiele der Erfindung werden im Folgenden anhand von Figuren näher erläutert. Es zeigen:
- Figur 1: eine Draufsicht auf eine Unterbaugruppe mit daran angeordneten Kabeln;
- Figur 2: eine Variante der in Figur 1 gezeigten Unterbaugruppe;
- Figur 3: die Unterbaugruppe nach Figur 1 in einem Sensor;
- Figur 4: eine Variante eines Sensors mit der in Figur 1 gezeigten, jedoch gekürzten, Unterbaugruppe und
- Figur 5: die in Figur 1 gezeigte Unterbaugruppe ohne Verlängerungsabschnitt in einem Sensor.

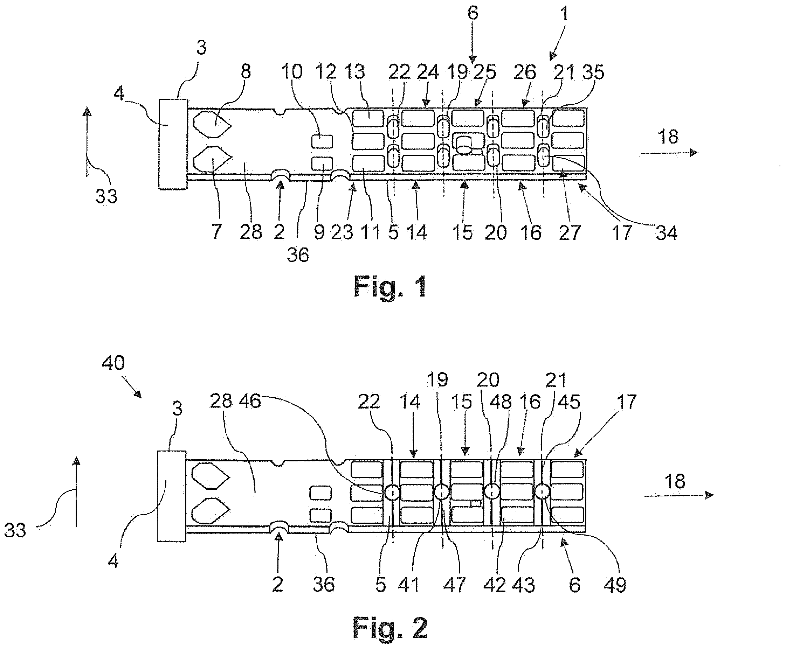

In Figur 1 ist eine Unterbaugruppe 1 für einen Sensor (nicht dargestellt) gezeigt, die eine Leiterplatte 2 aufweist, an der an einem ersten Ende 3 ein Spulensystem 4 und an einem gegenüberliegenden zweiten Ende 5 ein Verlängerungsabschnitt 6 angebracht ist. Die Leiterplatte 2 ist somit zwischen dem Spulensystem 4 und dem Verlängerungsabschnitt 6 angeordnet. Die Leiterplatte 2 ist nur schematisch dargestellt und weist verschiedene elektronische Bauelemente 7 bis 10, 28 sowie eine Anordnung 23 umfassend drei Anschlusselemente 11, 12, 13 für Kabel auf. Die nur schematisch dargestellte Leiterplatte 2 unterscheidet sich somit im Aufbau von den bekannten Leiterplatten nicht. Mit der Bezugszahl 28 ist ein Leuchtmittel zum optischen Signalisieren von Betriebs- und/oder Schaltzuständen eines Sensors bezeichnet, wobei dieses Leuchtmittel 28 eine Anzeige-LED sein kann. Es versteht sich, dass auch mehr als nur ein Leuchtmittel auf der Leiterplatte 2 vorgesehen sein können. So ist es beispielsweise möglich, dass vier Leuchtmittel auf der Leiterplatte 2 angeordnet sind.

Zwischen dem Verlängerungsabschnitt 6 und der Leiterplatte 2 ist eine Trennstelle 22 vorgesehen, die ein leichtes Abtrennen, d.h. Entfernen, des Verlängerungsabschnitts 2 von der Leiterplatte 2 ermöglicht. Der Verlängerungsabschnitt 6 ist in Längsrichtung 18 in mehrere vorzugsweise baugleiche Abschnitte 14 bis 17 unterteilt. Zwischen jedem Abschnitt 14 bis 17 ist eine Trennstelle 19 bis 21 vorgesehen, die ein leichtes Abtrennen von dem benachbarten Abschnitt ermöglicht. Diese Trennstellen 19 bis 22 weisen einen definierten, vorzugsweise denselben, Abstand zueinander auf. Jeder Abschnitt umfasst zudem eine Anordnung 24 bis 27 aus mindestens einem Anschlusselement für mindestens ein Kabel.

In Figur 1 umfasst jede Anordnung 24 bis 27 der Abschnitte 14 bis 17 drei Anschlusselemente, wobei diese Anschlusselemente der Anordnungen 24 bis 27 nicht mit Bezugszahlen versehen sind. An der Anordnung 27 mit ihren drei Anschlusselementen sind vier Kabel 29 bis 32 angebracht. Die Kabel werden zu einem Stecker oder einem Kabelanschluss geführt werden. Ein solcher Stecker oder Kabelanschluss ist in der Figur 1 jedoch nicht zu sehen, weil diese Elemente Teil des fertiggestellten Sensors sind, die in Figur 1 jedoch nicht dargestellt ist.

Die Trennstellen 19 bis 22 können beispielsweise Ausfräsungen, Kerben oder Bohrungen sein. In Figur 1 handelt es sich bei den Trennstellen 19 bis 22 um zwei in Querrichtung 33 des Verlängerungsabschnitts 6 benachbart angeordnete Bohrungen, wobei nur die Bohrungen 34 und 35 der Trennstelle 21 mit Bezugszahlen versehen sind. Vorteilhaft bei diesen Trennstellen 19 bis 22 ist, dass diese einfach und sehr kostengünstig in den Verlängerungsabschnitt 6 eingebracht werden können.

Es versteht sich, dass anstelle von zwei Bohrungen 34, 35 auch mehr als nur zwei oder gar nur eine Bohrung vorgesehen sein können. Die Bohrungen 34, 35 können auch durch Kerben ersetzt werden. Möglich ist auch, dass die Trennstellen 19 bis 22 sowohl Kerben als auch Bohrungen aufweisen. Anstelle dieser Kerben bzw. Bohrungen kann auch eine Ausfräsung vorgesehen sein.

In einer besonderen Ausführungsform kann die wenigstens eine Bohrung und/oder die wenigstens eine Kerbe auf einer Ausfräsung angeordnet sein, die entlang der Querrichtung 33 des Verlängerungsabschnitts 6 verläuft. Dadurch gestaltet sich das Durchtrennen an der entsprechenden Trennstelle 19 bis 22 besonders einfach.

Der in Figur 1 dargestellte Verlängerungsabschnitt 6 kann beispielsweise eine Länge von 20 mm besitzen, womit die Abschnitte 14 bis 17 jeweils eine Länge von 5 mm aufweisen. Durch Abtrennen eines der Abschnitt 14 bis 17 kann damit die Unterbaugruppe 1 um jeweils 5 mm gekürzt werden. Soll die Unterbaugruppe 1 um 20 mm gekürzt werden, so muss der gesamte Verlängerungsabschnitt 6 von der Leiterplatte 2 abgetrennt werden.

Es versteht sich, dass der Verlängerungsabschnitt 6 auch größer oder kleiner als 20 mm sein kann.

Zudem können die Abschnitte des Verlängerungsabschnitts 6 kleiner ausgebildet sein, so dass der Verlängerungsabschnitt 6 mehr als nur vier Abschnitte aufweist. Dadurch und durch die Variation der Länge des Verlängerungsabschnitts ist es möglich, die verschiedensten Größen an Sensorlängen abzudecken. In diesem Fall ist zwischen dem direkt an die Leiterplatte 2 angrenzenden Abschnitt des Verlängerungsabschnitts sowie zwischen jedem anderen Abschnitt des Verlängerungsabschnitts ebenfalls eine Trennstelle zum einfachen Durchtrennen vorgesehen. Zudem umfasst jeder Abschnitt auch eine Anordnung mit mindestens einem Anschlusselement für mindestens ein Kabel auf.

Denkbar ist natürlich auch, dass der Verlängerungsabschnitt weniger als vier Abschnitte aufweist, was natürlich die Variationsmöglichkeit hinsichtlich verschiedener Sensorlängen einschränkt. Deshalb ist es vorteilhaft, wenn der Verlängerungsabschnitt eine möglichst große Anzahl an über Trennstellen miteinander verbundene Abschnitte aufweist.

Vorteilhafthafterweise besitzt der Verlängerungsabschnitt eine solche Länge, dass die Unterbaugruppe ohne Kürzung des Verlängerungsabschnitts in einen Sensor mit der größten Länge und nach Entfernen des Verlängerungsabschnitts in einen Sensor mit der geringsten Länge eingebaut werden kann. Vorzugsweise hat die Unterbaugruppe, bestehend aus Leiterplatte Spulensystem, damit eine standardisierte Größe, die ohne Bearbeitung in einen Sensor mit der geringsten Länge eingebaut werden kann. Für größere Sensorlängen besitzt die Unterbaugruppe den Verlängerungsabschnitt, der durch Kürzen des Verlängerungsabschnitts an die gewünschte Sensorlänge angepasst werden kann.

In Figur 2 ist eine Variante 40 der in Figur 1 dargestellten Unterbaugruppe dargestellt. Da sich diese Unterbaugruppe 40 nur durch den Aufbau der Trennstellen 19 bis 22 für das Kürzen der Unterbaugruppe 1 nach Figur 1 unterscheidet, sind die Bezugszahlen im Wesentlichen beibehalten worden. Der Übersicht halber sind jedoch nur einige Elemente der Unterbaugruppe 40 mit Bezugszahlen versehen.

Die Unterbaugruppe 40 weist wiederum die Leiterplatte 2 auf, die zwischen dem Spulensystem 4 und dem Verlängerungsabschnitt 6 angeordnet ist.

Der Verlängerungsabschnitt 6 besteht aus den vier Abschnitten 14 bis 17, wobei an der Anordnung 27 mit den drei Anschlusselementen des letzten Abschnitts 17 mehrere Kabel 29 bis 32 angebracht sind.

Die Trennstellen 19 bis 22 sind als Ausfräsungen 41 bis 45 ausgebildet, wobei in einer Mitte einer jeden Ausfräsung 41 bis 45 eine Bohrung 46 bis 49 vorgesehen ist. Die Bohrungen 46 bis 49 befinden sich somit in der entsprechenden Ausfräsung 41 bis 45. Durch die Kombination von einer Ausfräsung 41 bis 45 mit einer Bohrung 46 bis 49 gestaltet sich das Durchtrennen an der entsprechenden Trennstelle 19 bis 22 besonders einfach.

Anstelle von nur einer Bohrung können in Querrichtung 33 des Verlängerungsabschnitts 6 natürlich auch mehrere zueinander benachbarte Bohrungen in den Ausfräsungen 41 bis 45 vorgesehen sein. Die Bohrungen können zudem wahlweise durch andere Mittel, wie zum Beispiel durch Kerben, ersetzt werden.

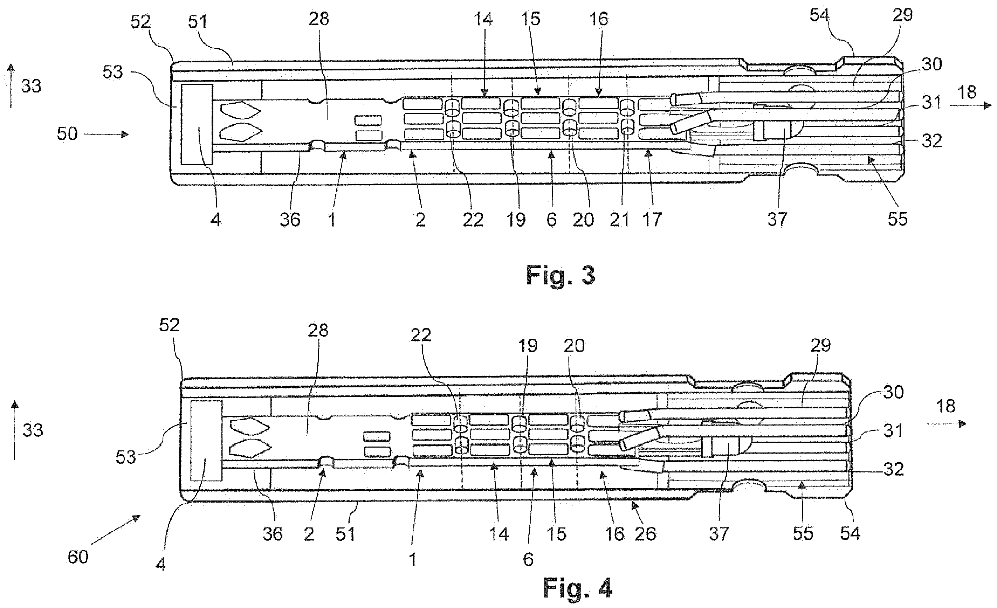

Figur 3 zeigt einen Sensor 50 mit der Unterbaugruppe 1 nach Figur 1. Die Unterbaugruppe 1 befindet sich vollständig in einem Gehäuse 51 des Sensors 50, wobei das Gehäuse 51 an einem ersten Ende 52 des Sensors 50, an dem sich das Spulensystem 4 befindet, von einer Kappe 53 verschlossen ist. Die Unterbaugruppe 1 ist vollständig von Vergussmasse umgeben, was in der Figur 3 jedoch nicht gezeigt ist.

Der Verlängerungsabschnitt 6 umfasst die vier Abschnitte 14 bis 17 mit jeweils zwei benachbarten, als Bohrungen 34, 35 ausgebildeten, Trennstellen 19 bis 22 zum einfachen Durchtrennen. Da der Verlängerungsabschnitt 6 alle vier Abschnitte 14 bis 17 aufweist, ist die Unterbaugruppe 1 in einen Sensor eingebaut, der besonders lang ist.

Soll die Unterbaugruppe 1 in einen Sensor mit einer geringeren Länge eingebaut werden, so ist dies ebenfalls möglich, weil ein Teil der Abschnitte oder gar alle Abschnitte, d.h. der gesamte Verlängerungsabschnitt 6, abgetrennt werden können.

Die Kabel 29 bis 32 werden zu einem Kabelanschluss 36 des Sensors 50 geführt. Der Aufbau eines solchen Kabelanschlusses 36 ist bekannt und ist an einem dem ersten Ende 52 des Sensors 50 gegenüberliegenden zweiten Ende 54 angeordnet. Das zweite Ende 54 wird durch eine Verschlusskappe 37 verschlossen und durch eine Dichtung 38 zusätzlich abgedichtet. Die Dichtung 38 kann als O-Dichtring ausgebildet sein. Durch eine Halterung 39 wird der Kabelanschluss 36 im Sensor 50 zusätzlich fixiert.

In Figur 4 ist ein Sensor 60 mit der Unterbaugruppe 1 nach Figur 1 dargestellt.

Die Unterbaugruppe 1 besteht wiederum aus dem Spulensystem 4, der daran angeordneten Leiterplatte 2 sowie den sich an die Leiterplatte 2 anschließenden Verlängerungsabschnitt 6. Die Unterbaugruppe 1 ist von einer nicht dargestellten Vergussmasse umgeben. Diese Vergussmasse ist zusammen mit der Unterbaugruppe 1 in Längsrichtung 18 wiederum vom Gehäuse 51 umschlossen und wird an dem Ende 52 von der Kappe 53 umgeben, die den Sensor 60 an diesem Ende 52 verschließt.

Der Verlängerungsabschnitt 6 wurde um einen Abschnitt, nämlich um den Abschnitt 17 gekürzt (vergleiche Figur 1), so dass die Kabel 29 bis 32 an der Anordnung 26 mit ihren drei Anschlusselementen (ohne Bezugsziffern) des Abschnitts 16 angebracht sind. Durch Entfernen, d.h. durch Abtrennen, des Abschnitts 17 wurde nicht nur der Verlängerungsabschnitt 6, sondern die gesamte Unterbaugruppe 1 gekürzt, so dass die Unterbaugruppe 1 nun eine geringere Länge besitzt und somit in einen Sensor 60, der eine geringere Länge wie der Sensor 50 besitzt, eingebaut ist.

Die Kabel 29 bis 32 werden wiederum zu dem Kabelanschluss 36 des Sensors 60 geführt, wobei der Kabelanschluss 36 am zweiten Ende 54 des Sensors 60 untergebracht ist.

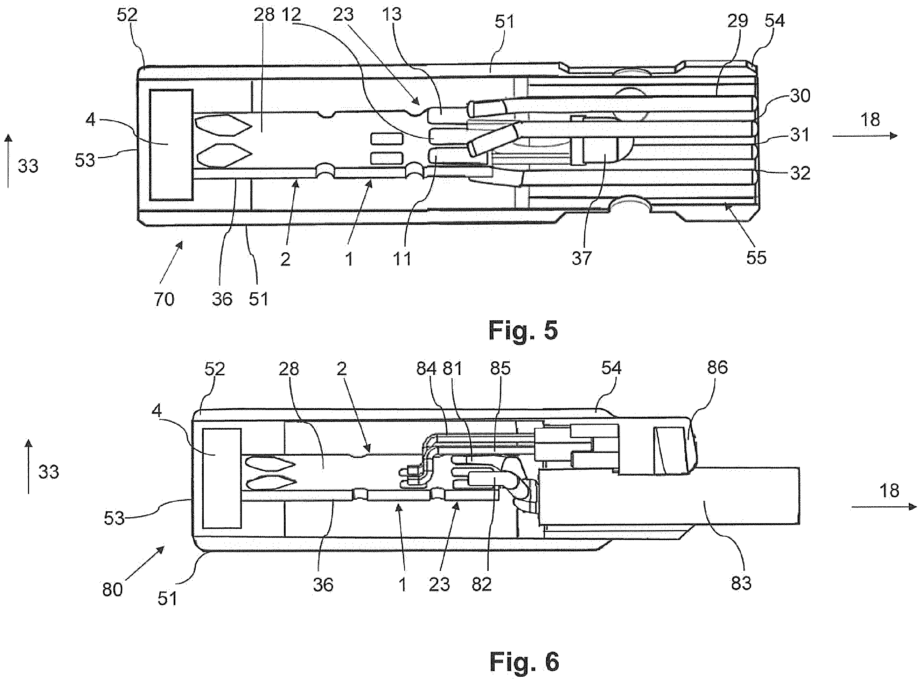

In der Figur 5 ist ein Sensor 70 mit der Unterbaugruppe 1 dargestellt, bei der der gesamte Verlängerungsabschnitt 6 entfernt wurde. Die Abtrennung dieses Verlängerungsabschnitts 6 wurde durch Durchtrennen an der Trennstelle 22, die zwischen dem Verlängerungsabschnitt 6 und der Leiterplatte 2 liegt (vergleiche Figur 1), durchgeführt. Das Kürzen der Unterbaugruppe 1 durch Entfernen des Verlängerungsabschnitts 6 wird vorzugsweise mit einem Stegtrenner (nicht gezeigt) durchgeführt, weil dadurch weder Staub noch Schmauch entsteht. Weil aufgrund der Trennstelle 22 der Verlängerungsabschnitt 6 einfach abgetrennt werden kann, kann das Abtrennen ausgezeichnet in den Fertigungsprozess des Sensors 70 integriert werden und lässt sich sogar leicht automatisieren.

Am zweiten Ende 54 des Sensors 70 ist der Kabelanschluss 36 vorgesehen, in den die Kabel 29 bis 32 geführt werden.

Damit lässt sich festhalten, dass aufgrund eines Verlängerungsabschnitts mit den verschiedenen Abschnitten, die über entsprechende Trennstellen miteinander verbunden sind, sich mit sehr wenigen verschiedenen Bauteilen eine sehr breite Spanne an verschiedenen Sensorlängen realisieren lässt. Vorteilhaft ist dabei, dass nur starre, einfach zu handhabende Bauteile und Baugruppen eingesetzt werden, die den Fertigungsprozess vereinfachen und das Automatisieren des Fertigungsprozesses ermöglichen.

Auf Steckerstifte kann verzichtet werden, weil der Abstand zwischen den entsprechenden Unterbaugruppen und den korrespondierenden Kabelanschlüssen sehr gering ist. Falls es bei diesen Sensoren 50, 60, 70 dennoch erforderlich sein sollte, auch Steckerstifte einzusetzen, so können diese Steckerstifte Standardlängen aufweisen, weil die Distanzen zwischen Unterbaugruppe und Kabelanschluss bei Sensoren unterschiedlicher Länge ausschließlich durch Anpassung des Verlängerungsabschnitts bzw. Entfernen des Verlängerungsabschnitts überbrückt werden.

### Bezugszeichenliste

- 1: Unterbaugruppe
- 2: Leiterplatte
- 3: Erstes Ende
- 4: Spulensystem
- 5: Zweites Ende
- 6: Verlängerungsabschnitt
- 7 bis 10: Bauelemente
- 11 bis 13: Anschlusselemente
- 14 bis 17: Abschnitte
- 18: Längsrichtung
- 19 bis 22: Trennstelle
- 23 bis 27: Anordnung
- 28: Leuchtmittel
- 29 bis 32: Kabel
- 33: Querrichtung
- 34 und 35: Bohrungen
- 36: Kabelanschluss
- 37: Verschlusskappe
- 38: Dichtung
- 39: Halterung
- 40: Unterbaugruppe
- 41 bis 45: Ausfräsungen
- 46 bis 49: Bohrungen
- 50: Sensor
- 51: Gehäuse
- 52: Erstes Ende des Sensors
- 53: Kappe
- 54: Zweites Ende des Sensors
- 55 60: Sensor
- 70: Sensor

## Patentansprüche

1. Unterbaugruppe (1, 40) für einen Sensor (50, 60, 70), umfassend ein Spulensystem (4) sowie eine daran angeordnete Leiterplatte (2), wobei an der Leiterplatte (2) in Längsrichtung (18) ein Verlängerungsabschnitt (6) angebracht ist, so dass die Leiterplatte (2) zwischen dem Spulensystem (4) und dem Verlängerungsabschnitt (6) angeordnet ist, wobei zwischen dem Verlängerungsabschnitt (6) und der Leiterplatte (2) eine Trennstelle (22) vorgesehen ist und wobei die Trennstelle (22) ein einfaches Abtrennen des Verlängerungsabschnitts (6) von der Leiterplatte (2) ermöglicht, **dadurch gekennzeichnet, dass** der Verlängerungsabschnitt (6) entlang der Längsrichtung (18) mehrere hintereinander angeordnete Abschnitte (14 bis 17) umfasst, wobei jeweils zwischen zwei benachbarten Abschnitten (14 bis 17) eine Trennstelle (19 bis 21) für ein einfaches Durchtrennen des Verlängerungsabschnitts (6) vorgesehen ist.

2. Unterbaugruppe für einen Sensor nach Patentanspruch 1, **dadurch gekennzeichnet, dass** die Trennstellen (19 bis 22) als eine Ausfräsung (41 bis 45) und/oder mindestens eine Kerbe und/oder mindestens eine Bohrung (34, 35, 46 bis 49) ausgebildet sind.

3. Unterbaugruppe für einen Sensor nach Patentanspruch 1, **dadurch gekennzeichnet, dass** jede Trennstelle (19 bis 22) entlang einer Querrichtung (33) des Verlängerungsabschnitts (6) und in einem definierten Abstand zueinander mehrere Bohrungen (34, 35) und/oder mehrere Kerben aufweist.

4. Unterbaugruppe für einen Sensor nach Patentanspruch 2, **dadurch gekennzeichnet, dass** die wenigstens eine Bohrung (46 bis 49) und/oder die wenigstens eine Kerbe in einer Ausfräsung (41 bis 45) angeordnet ist, wobei die Ausfräsung (41 bis 45) entlang einer Querrichtung (33) des Verlängerungsabschnitts (6) verläuft.

5. Unterbaugruppe für einen Sensor nach Patentanspruch 1, **dadurch gekennzeichnet, dass** jeder Abschnitt (14 bis 17) eine Anordnung (23 bis 27) umfassend zumindest ein Anschlusselement für Kabel (29 bis 32) aufweist.

6. Sensor (50, 60, 70) aufweisend die Unterbaugruppe nach den Patentansprüchen 1 bis 5.

## Claims

1. Subassembly (1, 40) for a sensor (50, 60, 70), comprising a coil system (4) and a printed circuit board (2) arranged on the coil system, wherein an extension section (6) is attached to the printed circuit board (2) in the longitudinal direction (18), so that the printed circuit board (2) is arranged between the coil system (4) and the extension section (6), wherein a separation point (22) is provided between the extension section (6) and the printed circuit board (2), and wherein the separation point (22) allows the extension section (6) to be easily detached from the printed circuit board (2), **characterized in that** the extension section (6) comprises a plurality of sections (14 to 17) arranged one behind the other along the longitudinal direction (18), wherein a separation point (19 to 21) for easily separating off the extension section (6) is provided between each pair of adjacent sections (14 to 17).

2. Subassembly for a sensor according to Claim 1, **characterized in that** the separation points (19 to 22) are in the form of a milled portion (41 to 45) and/or at least one notch and/or at least one bore (34, 35, 46 to 49).

3. Subassembly for a sensor according to Claim 1, **characterized in that** each separation point (19 to 22) has a plurality of bores (34, 35) and/or a plurality of notches along a transverse direction (33) of the extension section (6) and at a defined distance from each other.

4. Subassembly for a sensor according to Claim 2, **characterized in that** the at least one bore (46 to 49) and/or the at least one notch is arranged in a milled portion (41 to 45), wherein the milled portion (41 to 45) runs along a transverse direction (33) of the extension section (6).

5. Subassembly for a sensor according to Claim 1, **characterized in that** each section (14 to 17) has an arrangement (23 to 27) comprising at least one connection element for cables (29 to 32).

6. Sensor (50, 60, 70) comprising the subassembly according to Claims 1 to 5.

## Revendications

1. Sous-ensemble (1, 40) pour un capteur (50, 60, 70), comportant un système de bobines (4) ainsi qu'une carte de circuit imprimé (2) disposée sur celui-ci, une section de prolongement (6) étant montée dans la direction longitudinale (18) sur la carte de circuit imprimé (2) de sorte que la carte de circuit imprimé (2) est disposée entre le système de bobines (4) et la section de prolongement (6), un point de sectionnement (22) étant prévu entre la section de prolongement (6) et la carte de circuit imprimé (2), et le point de sectionnement (22) permettant de séparer facilement la section de prolongement (6) de la carte de circuit imprimé (2), **caractérisé en ce que** la section de prolongement (6) comporte, le long de la direction longitudinale (18), plusieurs sections (14 à 17) disposées les unes derrière les autres, un point de sectionnement (19 à 21) étant respectivement prévu entre deux sections voisines (14 à 17) pour une séparation facile de la section de prolongement (6).

2. Sous-ensemble pour un capteur selon la revendication 1, **caractérisé en ce que** les points de sectionnement (19 à 22) sont réalisés sous forme d'un fraisage (41 à 45) et/ou d'au moins une encoche et/ou d'au moins un alésage (34, 35, 46 à 49).

3. Sous-ensemble pour un capteur selon la revendication 1, **caractérisé en ce que** chaque point de sectionnement (19 à 22) présente plusieurs alésages (34, 35) et/ou plusieurs encoches le long d'une direction transversale (33) de la section de prolongement (6) et avec un écartement défini les uns des autres.

4. Sous-ensemble pour un capteur selon la revendication 2, **caractérisé en ce que** l'au moins un alésage (46 à 49) et/ou l'au moins une encoche sont disposés dans un fraisage (41 à 45), le fraisage (41 à 45) s'étendant le long d'une direction transversale (33) de la section de prolongement (6).

5. Sous-ensemble pour un capteur selon la revendication 1, **caractérisé en ce que** chaque section (14 à 17) comporte un agencement (23 à 27) comprenant au moins un élément de connexion pour des câbles (29 à 32).

6. Capteur (50, 60, 70) comportant le sous-ensemble selon les revendications 1 à 5.
